# EUROPEAN PATENT SPECIFICATION

(11) **EP 4 041 519 B1**
(45) Date of publication and mention of the grant of the patent: **16.04.2025**
(21) Application number: 20797852.9
(22) Date of filing: 30.09.2020
(51) Int. Cl.: B29C 41/14, A41D 19/015, B29D 99/00, B32B 5/18, B29C 59/00, B29C 44/56

(54) **METHOD OF MAKING A LATEX DIPPED ARTICLE WITH A WAVE-LIKE TEXTURED POROUS STRUCTURE**
HERSTELLUNGSVERFAHREN EINES LATEX-DIPPED-ARTIKELS MIT EINER WELLENHAFTEN TEXTURIERTEN PORÖSEN STRUKTUR
PROCÉDÉ DE FABRICATION D'UN ARTICLE TREMPÉ EN LATEX AVEC UNE STRUCTURE POREUSE ONDULÉE

(30) Priority: 10.10.2019 LK 1920799
(43) Date of publication of application: 17.08.2022
(73) Proprietor: Dipped Products PLC, 01000 Colombo 10 (LK)
(72) Inventor: MEDIRIYAWATHTHA, Mediriyawaththage D.N.S., 01000 Colombo 10 (LK); KARIYAPPERUMA, Kariyapperuma M.Y.U., 01000 Colombo 10 (LK); DANGALLE, Hasini Dinushika, 01000 Colombo 10 (LK); RATNAYAKE, Upul Nishantha, 01000 Colombo 10 (LK)
(74) Representative: Bosch Jehle Patentanwaltsgesellschaft mbH
(86) International application number: PCT/IB2020/059135
(87) International publication number: WO 2021/070010

(56) References cited:
- EP-A1- 1 671 555
- EP-B1- 1 671 555
- WO-A1-2005/002375
- WO-A1-2008/123356
- WO-A1-2013/007983
- CN-A- 106 072 923
- CN-A- 108 384 079
- US-A- 4 497 072
- US-A1- 2013 219 588
- US-A1- 2013 305 430
- US-A1- 2016 192 721

## Description

### FIELD OF THE INVENTION / BACKGROUND

The present invention relates to a method for making a latex dipped article with a wave-like textured porous structure. The wave-like textured porous structure can be applied to any article which can be dipped in latex. In one embodiment the article can be a glove which is made by dipping a hand like former into a latex compound that contains different compounding chemicals and different chemical treatments to produce a finished glove. When compounding the latex, different chemical ingredients are added to the latex to get the desired properties and to improve the quality of the end product. The latex contains curing agents that are used to cure the rubber, and a latex film is produced. The formers are first coated with the coagulant, preferably calcium nitrate solution, to facilitate the gelling of the latex. Then the formers are dipped into a latex compound to form a thin layer on the surface of the former. The latex gloves go through one or more rinses to leach out the excess calcium and water-soluble materials. The coagulated layer is dried and cured in a heated oven. After the curing process gloves are reversed stripped from the formers and necessary post-treatments are done on the glove surface and packed. Conventionally, the outer surface of the glove is determined by the texture of the glove former whilst the inner surface of the stripped glove is smooth.

The gripping characteristics are an extremely desirable feature of a latex glove, especially Nitrile Butadiene rubber (NBR) latex gloves that provide slip resistance. Natural rubber latex gloves, the outer surface can be textured to obtain better gripping characteristics in different way, however the commonly used conventional methods of surface texturization in gloves includes using a former with embossed patterns or using post-treatment process such as solvent treatment. Traditionally, in NBR gloves, the textured outer surface is produced by dipping a textured former into aqueous latex medium and reversed stripping of the glove. Therefore, the outer surface of the glove shows the textured pattern in the former which can be varied according to the requirements of the glove manufacturer. Diamond, sand patch and honeycomb are commonly used surface texture patterns in commercially available former types. Most of the textured gloves created as a result of former texture provide a better grip in dry condition than in wet and oil conditions. The main drawback of textured gloves made with patterned surface is that though it provides a good grip under dry conditions, the grip performance under wet and oil conditions are poor.

Further, the grip/friction properties of the nitrile latex gloves are poor in contact with different environments (dry/wet/oil) and the dexterity of the glove is also less in comparison to natural rubber glove due to the inherited stiffness of nitrile gloves.

Therefore, use of gloves with surface textures made of patterned formers is not an ideal solution to provide excellent grip under all environmental conditions which includes dry, wet and oil.

Hence, it is apparent that there is a critical need for a latex glove specially a NBR glove with a textured structure on the surface that provides excellent grip and friction for all wet, dry and oily conditions with improved dexterity.

### PRIOR ART

US patent 2008/0244809 A1 refers to a latex glove with engineered geometrically defined surface texture provides improved dry, wet, or oil surface-gripping characteristics made by applying polymeric coagulant coating, applying discrete coagulant particles, dipping the coated former into an aqueous latex emulsion, vulcanizing, stripping and dissolving the discrete coagulant particles in suitable solvent or water to reveal the geometrically designed texture.

US Patent 4,497,072 refers to a porous glove made of fabric material with a foamed resin coating that has sharp projections in the shape of broken bubbles whereby the glove provides tenacious grip and method of making the porous glove. The bubbles in the coated solution were broken by a vacuum pump.

US Patent 8119200B2 refers to a flexible and breathable glove having excellent grip in wet & oil environment which is made by a semi-gelled polymeric coating on an electrolyte treated glove liner substrate, is treated with a foamed solution of a surfactant, tenside or aerosol solution and overcoated with an electrolyte solution.

US Patent 8119200B2 refers to an improved slip and/or skid-resistant surface produces a better grip in grease and oily environment, made by laminating the foam surface to the substrate.

US patent 8387167 B2 refers to a glove which contains a resin surface on which recessed portions in different sizes are formed randomly. There are two portions of voids in the surface, large (first) portion voids are formed by the adhering materials going in and out of the surface. The diameter of the first void portions are changed by the changing the size of the adhering material. US 2010/0107304 A1 discloses a glove having improved anti-slip properties thanks to irregularities on its surface made with a granular material.

### SUMMARY OF THE INVENTION

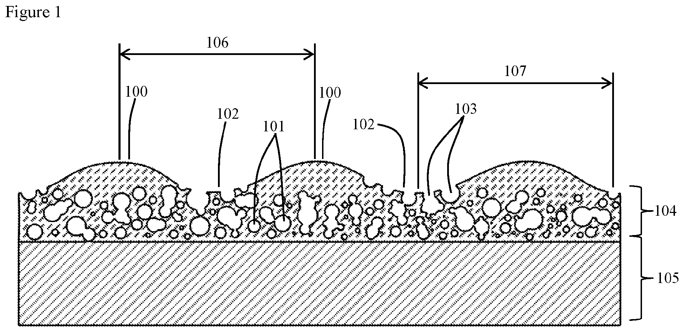

The present invention relates to a latex dipped article preferably a glove with a wave-like textured porous structure on the surface which provides a better grip/friction under different environmental conditions including dry, wet and oil. The wave-like textured porous surface is formed by repeatedly removing the skin of the outer layer followed by deposition of removed skin on the outer surface of the glove by dipping the glove in a distorting solution thereafter gelling, drying and curing the glove to obtain the finished product. As shown in Figure 1, the present invention may provide a wave-like textured porous surface coating on the outer surface of the glove to improve, dry, wet and oil grip while maintaining an improved dexterity of the glove. The present invention provides a wave-like textured porous structure that consists of open-cell porous structure on the trough of the wave pattern and micro-roughness on the crest of the wave pattern.

### BRIEF DESCRIPTION OF THE DRAWINGS

FIG. 1 illustrates a flow diagram for a method of manufacturing article according to embodiments of the invention.
FIG. 2 illustrates a view of vertical cross section to the plane of dipping or to the glove direction according to embodiment of the invention.

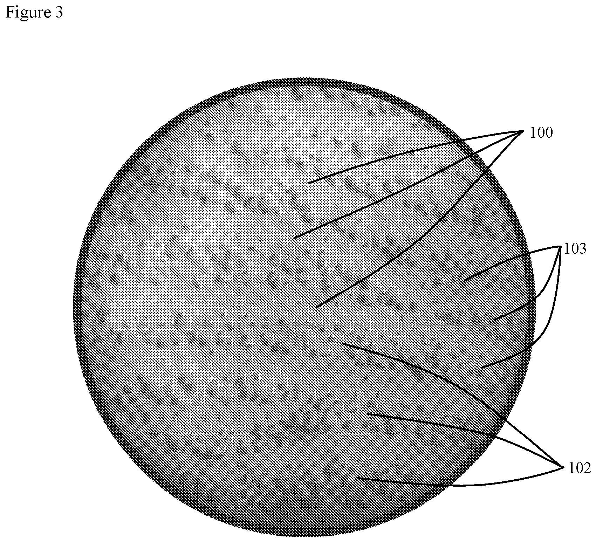

FIG. 3 is a magnified microscope image showing the surface structure of the gloves according to the embodiment of the invention.
FIG. 4 is a scanning electron image of a perspective view of wave-like textured porous structure of the outer layer.
FIG. 5 is a scanning electron image of a perspective view of the crest area of the wave-like textured porous structure of the outer layer.
FIG. 6 is a scanning electron image of a perspective view of the trough area of the wave-like textured porous structure of the outer layer.
FIG. 7 is the conventional glove texture 1.
FIG. 8 is the conventional glove texture 2.

### DETAILED DESCRIPTION OF THE INVENTION

The present invention relates to a latex dipped article preferably a glove comprises two layers, where the outer layer consists of a wave-like textured porous surface made of latex foam and inner layer made of non-foamed conventional latex. The latex foam outer layer comprising a wave-like textured porous and non-porous repeated surface pattern. Carboxylated Acrylonitrile Butadiene rubber (X-NBR) is the preferred latex type for the outer and inner layers of the latex dipped article. Alternatively, the composition of inner and outer layer may also consist and not limited to natural latex, nitrile latex, styrene-butadiene copolymer, non-carboxylated acrylonitrile-butadiene copolymer, polychloroprene latex, polyurethane latex, polyacrylate, butyl rubber, polyvinyl chloride, polyvinyl acetate, polyethylene, polyester, polyether, sodium carboxymethylcellulose, Silicon rubber, fluoroelastomers or combinations thereof.

Optionally, the latex dipped article may comprise multi layers wherein at least one of said outer layer and inner layer. For an example, the three layers glove, wherein the three layers comprises one of said outer layer, inner layer and intermediate layer. The number of intermediate layers can be altered to produce multi-layers articles.

### STRUCTURE OF THE LATEX DIPPED ARTICLE WITH WAVE-LIKE TEXTURED POROUS SURFACE

### Structure of the outer layer with a wave-like textured porous surface

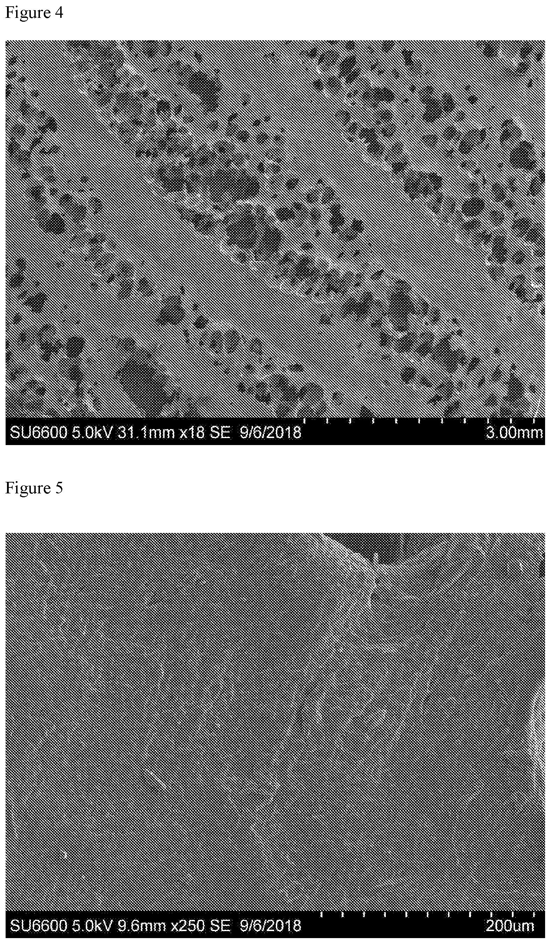

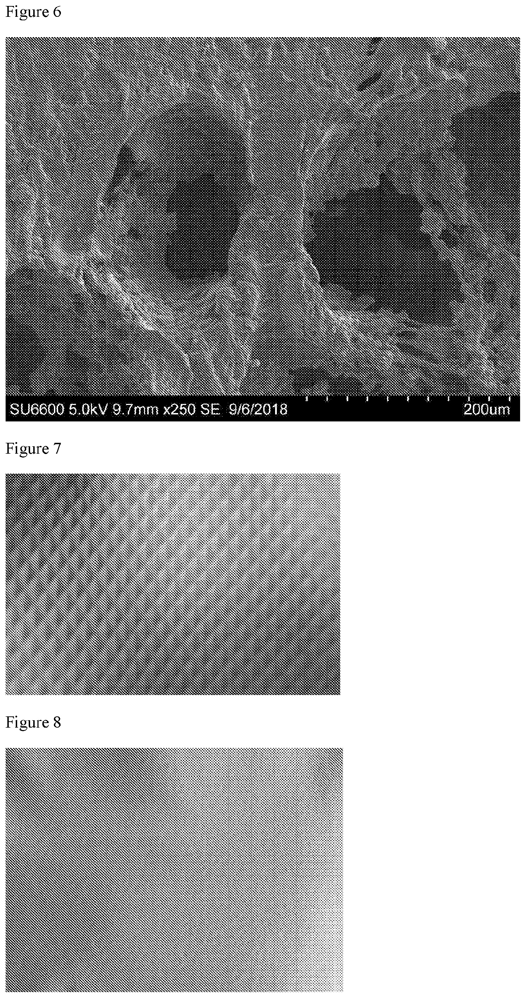

Figure 1 below depicts the appearance of the wave-like textured porous surface on the outer layer (104) of the latex dipped article. A Scanning Electron microscopic (SEM) of the same is illustrated in Figure 4. The wave-like textured porous structure consists of the plurality of surfaces consisting non-porous crest areas (100) and porous trough areas (102) which is visible in an ordered manner as an alternative pattern of porous and non-porous areas. The crest (100) of the wave pattern provides micro roughness as in Figure 5, and trough of the pattern has an open-cell porous structure as in Figure 6. The porous area of the article comprises of open (103) and closed (101) cavities in the range of 10 to 1000 microns in diameter. The length between two adjacent (106) crests or two adjacent troughs (107) of the wave pattern is in the range of 0.1 to 10.0 mm, more preferably the range is 0.5 to 5.0 mm and most preferably the range is 1.0 to 2.0 mm.

A foamed nitrile latex compound with a foaming agent and conventional compounding ingredients including and not limited to sulphur, accelarators, zinc oxide, viscosity modifiers, colour pigments, antioxidants and stabilizers is used to prepare the X-NBR latex foam compound.

### Method of making the wave-like textured porous surface of the outer layer

This unique surface is made by repeatedly removing the skin of the outer layer followed by deposition of removed skin on the outer surface of the glove and stabilizing/gelling the particles of the latex by immersing the glove in a distorting solution. With the removal and deposition of the skin of the outer layer produces a wave-like porous and non-porous repeated surface pattern parallel to the dipping plane and wave appearance can be observed perpendicular to the dipping plane (Cuff to finger direction). The wave-like textured porous pattern is created once the foamed compound gets in contact with the distorting solution.

The distorting solution used here is a mixture of calcium nitrate and surface-active agents and can be of water based or solvent base. In the present invention the effective concentration of calcium nitrate ranges from 100-400 g/L. If the calcium nitrate concentration of the distorting solution is less than 100 g/L, the intensity of the wave-like textured porous surface reduces, If the calcium nitrate concentration is greater than 400 g/L, the wave-like textured porous surface becomes irregular and uneven.

The calcium salt used here is not limited to calcium nitrate and can be any salt or combination thereof. At least one salt selected from the group consisting of calcium salts and ammonium salts of nitric acid, sulfuric acid, carbonic acid, phosphoric acid, hydrochloric acid and formic acid or a combination thereof can be used as an alternative to calcium nitrate. The surface-active agent is selected from the group consisting of fatty alcohol ethoxylates, alkylphenol ethoxylates (APEs) and fatty acid ethoxylates or combination thereof.

The gap between two crests or two trough of wave pattern can be controlled by the dipping speed of formers on to the distorting solution and the concentration of the distorting solution. The slow speed of dipping can obtain evenly distributed wave pattern and fewer gaps between two adjacent crests of the wave pattern. The preferable former dipping speed can be varied from 0.1to 2.0 cm/s in order to achieve evenly distributed wave-like textured porous and non-porous repeated surface pattern on the outer surface of the glove towards the glove direction.

The outer layer can be applied as a full dip where the dipping length is up to the cuff area or as a half dip where the dipping length is up to the wrist area. These lengths can be altered accordingly based on the requirement of the application.

### Inner layer

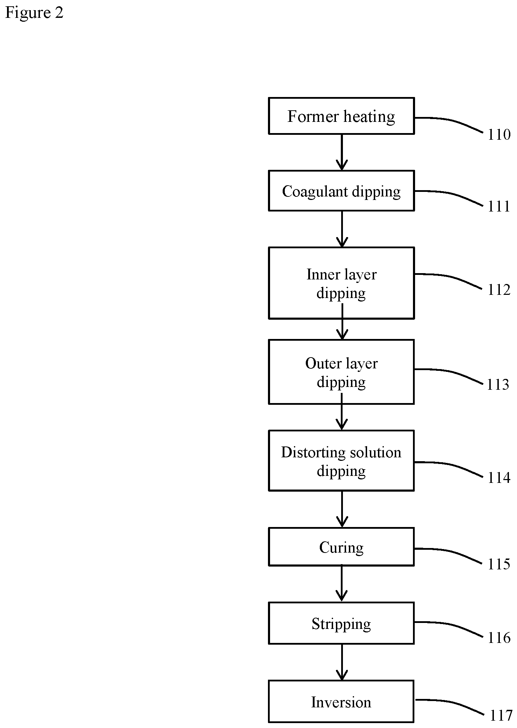

The inner layer of the latex dipped article is depicted as number 105 in Figure 2. This layer directly contacts with the skin and made of Carboxylated Acrylonitrile Butadiene (X-NBR) latex. The thickness of this layer ranges from 0.28-0.38mm and for fabric supported version 0.55 - 0.75 mm. This provides protection for number of chemicals including aliphatic hydrocarbons, acids and bases and petroleum derivatives, etc. The compound formulation has an approximate Total Solids Content (TSC) of 38-40% and contains conventional compounding agents including and not limited to sulphur, accelarators, zinc oxide, viscosity modifiers, colour pigments, antioxidants and stabilizers.

In the fabric supported latex dipped article, the first layer is deposited on a fabric liner which is dressed on to a hand shaped former. The fabric liner is made of yarns and available in two types as cut & sewn and knitted seamless. The fabric liner comprises yarns made with an aramid fiber, a polyethylene fiber, a steel fiber or combinations thereof.

### PROCESS OF MAKING A LATEX DIPPED ARTICLE WITH WAVE-LIKE TEXTURED POROUS SURFACE ON THE OUTER LAYER

The process of making the latex dipped article with wave like textures porous surface of the outer layer includes following steps. The process is illustrated in below Figure 1.

### Step 1: Coagulant dipping

The process starts at (110) where a clean and dry porcelain glove former is heated around 40°C and the heated former is evenly coated with a coagulant by immersing the former in a coagulant solution heated to 55°C and prepared according to below Formulation 1.

### Formulation 1

| **Compound** | **By weight** |
|---|---|
| Calcium nitrate | 30.0% |
| Isopropyl alcohol | 42.0% |
| Water | 28.0% |

In the fabric supported dipped article, before applying the coagulant, a fabric liner with a shape of the hand is dressed to the former. The dressed liner is then dipped in the coagulant solution.

### Step 2: Deposition of inner layer

The dried coagulant coated former is then dipped (111) into a latex compound. The below formulation 2 illustrates the ingredients used for the compound which has an approximate Total Solids Content (TSC) of 38-40% and contains conventional compounding agents including and not limited to sulphur, accelarators, zinc oxide, viscosity modifiers, colour pigments, antioxidants and stabilizers. The viscosity of the latex should be controlled around 50 cP at 25°C. (Measured using the Brookfield viscometer, spindle - 1, rpm - 60).

Carboxylated Acrylonitrile butadiene rubber (X-NBR) is the preferred latex type for the inner layer. Alternatively, the latex composition may consist of and not limited to natural latex, nitrile latex, styrene-butadiene copolymer, non-carboxylated acrylonitrile-butadiene copolymer, polychloroprene latex, polyurethane latex, polyacrylate, butyl rubber, polyvinyl chloride, polyvinyl acetate, polyethylene, polyester, polyether, sodium carboxymethylcellulose, Silicon rubber, fluoroelastomers or combinations thereof.

### Formulation 2

| **Compound** | **phr** |
|---|---|
| Latex | 100.00 |
| KOH | 0.45 |
| Surfactant | 0.20 |
| Sulfur | 1.30 |
| Activator | 4.10 |
| Accelerator | 2.20 |
| Dispersion agent | 0.20 |
| Anti-forming agent | 0.04 |
| Viscosity modifier | 0.15 |
| Wax | 0.50 |

Optionally, the partially gelled latex film is then leached in heated water of a temperature around 55°C to remove excess calcium and water-soluble ingredients.

### Step 3: Application of the outer latex layer

The partially gelled latex film is then dipped (112) into a foamed latex compound made of below formulation 3. The compound formulation has an approximate Total Solids Content (TSC) of 38-40% and contains conventional compounding agents including and not limited to sulphur, accelarators, zinc oxide, viscosity modifiers, colour pigments, antioxidants and stabilizers. In addition to the above ingredients, foaming agent is used to facilitate the generation of foam in the compound. In the below formulation 3 potassium oleate, a fatty acid soap is used as the foaming agent but not limited to fatty acid soaps, polycarboxylic acid soap, alkali metal soap and combination thereof can be used.

Carboxylated Acrylonitrile Butadiene rubber (X-NBR) is the preferred latex type for the outer layer. Alternatively, the latex composition may consist of other synthetic lattices including and not limited to Polychloroprene (CR), Styrene Butadiene Rubber (SBR), Butyl rubber, Synthetic polyisoprene and natural rubber or blends of the above.

### Formulation 3

| **Compound** | **By weight** |
|---|---|
| Latex | 100.00 |
| KOH | 0.45 |
| Surfactant | 0.20 |
| Sulfur | 1.30 |
| Activator | 4.10 |
| Accelerator | 2.20 |
| Forming agent | 0.20 |
| Viscosity modifier | 0.15 |
| Wax | 0.50 |

The viscosity of the latex compound (Before foam the latex) is in range of 50-500 cP, more preferably the viscosity is in range of 100-200 cP and most preferably the viscosity is in range of 140-160 cP at 25°C. (Brookfield viscometer (LV), spindle-2, rpm-6) with the viscosity modifier. If the viscosity is lesser than 50 cP or greater than 500 cP at 25°C, a proper wave-like textured porous structure in the outer layer cannot be obtained.

Foam compound of Carboxylated Acrylonitrile Butadiene rubber (X-NBR) latex is prepared after 24-48 hours maturation time to produce evenly distributed foam bubbles and bubble sizes at the range of 0.05-2.00 mm of diameter. The density of the foam compound needs to be controlled over time within the range of 15-45% and the outer layer thickness is governed by the foam density. If the foam density is greater than 45% or lesser than 15%, a proper wave-like porous structure in the outer layer cannot be obtained. The foam is generated by either mechanical foaming or chemical foaming wherein the present invention, mechanical foaming is preferred.

Mechanical and chemical foaming referred herein is the process of generating air bubbles within the latex compound through a mechanical action like agitation or a chemical reaction which produces gas by adding gas releasing agents/blowing agents.

### Step 4: Application of the distorting solution

Partially gelled inner latex layer is dried for 30 sec and dipped into the distorting solution (113) prepared according to below formulation 4. This unique surface is made by repeatedly removing the skin of the outer layer followed by deposition of removed skin on the outer surface of the glove and stabilizing/gelling the particles of the latex by immersing the glove in a distorting solution. The distorting solution helps to remove the skin of the outer layer repeatedly and deposit the removed skin on the outer surface of the glove. The distorting solution comprising calcium nitrate or at least one salt selected from the group consisting of calcium salts or ammonium salts of nitric acid, sulfuric acid, carbonic acid, phosphoric acid, hydrochloric acid or formic acid and a surface-active agent selected from the group consisting of fatty alcohol ethoxylates, alkylphenol ethoxylates (APEs) and fatty acid ethoxylates.

### Formulation 4 - Distorting Solution

| **Compound** | **By weight** |
|---|---|
| Calcium nitrate | 25.0% |
| Octyl phenol ethoxylate | 0.4% |
| Water | 74.6% |

### Step 5: Leaching

The gelled or partially gelled latex article is then dried for around 30 sec and dipped (114) into water heated to 50-60°C. This will leach out the residual calcium nitrate and other unnecessary water-soluble chemicals.

### Step 6: Curing

The gelled article is dried and cured (115) in an oven at 130° C for approximately 40 minutes. In the curing or vulcanization process the rubber molecules are cross-linked with sulfur to increase the elasticity and to enhance the strength characteristics of the article.

### Step 7: Stripping the article from the former (116)

The cured glove is allowed to cool and is then reversed stripped off the former.

### Step 8: Inversion of the finished article (117)

The finished, cured article is then turned inside out so that the textured surface is on the outside of the glove.

Another embodiment of the same procedure is described in below, embodiment 1 which is for a fabric supported dipped article.

Embodiment 1: Fabric supported latex dipped article with a wave-like textured porous surface.

Latex dipped articles were prepared in the same manner as above, except that cut & sewn or knitted seamless liner is put on a hand-shaped former, dipped in a calcium nitrate solution of formulation 1 and dried. Then the hand-shape former was dipped in glove compound of formulation 2, dipped in foam compound of formulation 3, dipped in distorting solution of formulation 4 and cured set at 130° C for 40 minutes and then removed from the former as the fabric liner comprises cut & sewn and knitted seamless liner which comprises an aramid fiber, a polyethylene fiber, a steel fiber or combinations thereof.

### PERFORMANCE OF THE LATEX DIPPED ARTICLE WITH A WAVE-LIKE TEXTURED POROUS SURFACE

### Grip test

Grip test is one of the common test methods used to test the grip of the glove. In pinch grip test, the force required to lift a vertically suspended cylindrical metal bar having a polished surface when it is pulled downwards is measured. The grip force is measured as a weight by taking the total weights of counterbalance loaded. The maximum load that can withstand without lifting the metal surface is the final results of the test. The above procedure states the measurement of dry grip and using the similar method wet and oil grip of the article can be measured by covering the metal bar with a layer of oil or water layer. A pinch grip test can perform to different surface textures and can compare the grip.

The grip test results of dry, wet and oil conditions for wave-like textured porous surface with compared to two conventional surfaces as in figure X and Y are shown in Table 1.

**TABLE 1**

| **Test glove** | **Dry Grip (kg)** | **Wet grip (kg)** | **Oil grip (kg)** |
|---|---|---|---|
| Article with a wave-like surface texture | 10.000 | 10.000 | 9.350 |
| Conventional surface texture 1 (Figure 7) | 8.000 | 8.005 | 4.020 |
| Conventional surface texture 2 (Figure 8) | 10.000 | 10.000 | 3.030 |

As shown in Table 1, the wave-like textured porous structure made according to Example 1 below exhibits improved wet and oil grip. When compared to conventional gloves, the wave-like textured porous article requires the highest grip force to slip the metal bar. According to the test results, the wave-like textured porous article shows an excellent oil and wet grip compared to conventional surface textures.

### Friction test

Friction test is a commonly used to determine the frictional characteristics of a material. The coefficient of friction (either static or kinetic) can be determined by the friction tester using the ASTM D 1894 standard.

The major items of the fixture include a 200 g square metal sled wrapped with a 1/8 in (3.2 mm) thick foam pad and a rectangular-shaped metal table with a defined surface finish. A pulley is located at one end of the table which allows the sled, when attached to the crosshead via a nylon or metal tow line to be pulled horizontally along the plate. Test material can be attached to either the sled or the plate or both. The coefficient of friction fixture mounts in the testing system load frame using Instron's Universal Testing Machine with standard type D base grip adapter. The tow line attaches directly to the load cell. The test sample is attached to the surface of the metal table and the sled is placed on top of the test sample.

The kinetic and the static coefficient of friction is measured by ASTM D 1894 standard. This test can be performed as same as the dry condition to measure the friction in wet and oil condition of the article surface by covering with oil or water layer on the surface of the attached article on the metal surface.

**Table 2: Friction Data of latex with different surface texture**

| | | Grip pattern types of the different glove | | |
|---|---|---|---|---|
| | Environment conditions | Wave-like textured porous glove | Conventional surface texture 1 (Figure 7) | Conventional Surface texture 2 ( Figure 8) |
| Friction force / N | Dry | 1.63 | 0.48 | 0.33 |
| | Wet | 1.08 | 0.28 | 0.28 |
| | Oil | 0.63 | 0.17 | 0.18 |
| Coefficient of friction | Dry | 0.82 | 0.24 | 0.17 |
| | Wet | 0.54 | 0.14 | 0.13 |
| | Oil | 0.32 | 0.08 | 0.09 |

As shown in Table 2, the Wave-like textured porous surface article made according to present invention exhibits improved dry, wet and oil friction. When compared to conventional gloves with different grip patterns, the present invention glove having the highest value of the coefficient of friction in dry, wet and oil environmental conditions.

## Claims

1. A method of forming a latex dipped article with a wave-like textured porous and micro-roughened surface pattern, comprising the steps of:
- Applying a coagulant on a former;
- Depositing the first layer by dip-coating the former with aqueous latex composition;
- Leaching the first latex layer in water;
- Dipping the partially gelled inner latex layer in foamed latex;
- Dipping the partially gelled latex foam outer layer in the distortion solution;
- Drying the latex article at 80 to 100°C and curing at the temperature range of 100-150°C;
- Stripping the cured article from the former;
- Inverting of the finished article.

2. The method according to claim 1, wherein the dipping speed in the distorting solution is 0.1-2.0 cm/s.

3. The method according to claim 1, wherein the distorting solution comprises calcium nitrate and surface-active agents.

4. The method according to claim 1, wherein the distorting solution comprises a calcium nitrate or at least one salt selected from the group containing calcium salts and ammonium salts of nitric acid, sulfuric acid, carbonic acid, phosphoric acid, hydrochloric acid and formic acid or a combination thereof.

5. The method according to claim 1, wherein the distorting solution comprises a concentration of calcium salt ranging from 100 to 400 g/l.

6. The method according to claim 1, wherein the distorting solution comprises a surface-active agent selected from the group containing fatty alcohol ethoxylates, alkylphenol ethoxylates (APEs) and fatty acid ethoxylates or combination thereof.

7. The method according to claim 1, comprising the step of dressing the fabric liner on the former before applying coagulant.

## Patentansprüche

1. Verfahren zur Herstellung eines Latex-Dipped-Artikels mit einem wellenhaften texturierten, porösen und mikro-aufgerauten Oberflächenmuster, umfassend die Schritte:
- Auftragen eines Koagulationsmittels auf einen Former;
- Abscheiden der ersten Schicht durch Tauchbeschichtung des Formers mit einer wässrigen Latexzusammensetzung;
- Auslaugen der ersten Latexschicht in Wasser;
- Eintauchen der teilweise gelierten inneren Latexschicht in geschäumtem Latex;
- Eintauchen der teilweise gelierten äußeren Latexschaumschicht in die Verformungslösung;
- Trocknen des Latexartikels bei 80 bis 100°C und Härten im Temperaturbereich von 100-150°C;
- Abziehen des gehärteten Artikels vom Former;
- Umwenden des fertigen Artikels.

2. Verfahren nach Anspruch 1, wobei die Eintauchgeschwindigkeit in die Verformungslösung 0,1-2,0 cm/s beträgt.

3. Verfahren nach Anspruch 1, wobei die Verformungslösung Calciumnitrat und oberflächenaktive Mittel enthält.

4. Verfahren nach Anspruch 1, wobei die Verformungslösung Calciumnitrat oder mindestens ein Salz, ausgewählt aus der Gruppe, die Calciumsalze und Ammoniumsalze von Salpetersäure, Schwefelsäure, Kohlensäure, Phosphorsäure, Salzsäure und Ameisensäure oder eine Kombination davon enthält, umfasst.

5. Verfahren nach Anspruch 1, wobei die Verformungslösung eine Calciumsalzkonzentration im Bereich von 100 bis 400 g/l umfasst.

6. Verfahren nach Anspruch 1, wobei die Verformungslösung ein oberflächenaktives Mittel, ausgewählt aus der Gruppe, die Fettalkoholethoxylate, Alkylphenolethoxylate (APEs) und Fettsäureethoxylate oder eine Kombination davon enthält, umfasst.

7. Verfahren nach Anspruch 1, umfassend den Schritt des Appretierens der Textilauskleidung auf dem Former vor dem Auftragen des Koagulationsmittels.

## Revendications

1. Procédé de formation d'un article trempé dans du latex avec un motif de surface poreux et microrugueux texturé en forme de vague, comprenant les étapes de :
- application d'un coagulant sur un moule ;
- dépôt de la première couche par revêtement par immersion du moule avec une composition aqueuse de latex ;
- lessivage de la première couche de latex dans de l'eau ;
- trempage de la couche interne de latex partiellement gélifiée dans du latex expansé ;
- trempage de la couche externe de mousse de latex partiellement gélifiée dans la solution de déformation ;
- séchage de l'article en latex à 80 à 100 °C et durcissement dans la plage de température de 100 à 150 °C ;
- décollement de l'article durci du moule ;
- retournement de l'article fini.

2. Procédé selon la revendication 1, dans lequel la vitesse de trempage dans la solution de déformation est de 0,1 à 2,0 cm/s.

3. Procédé selon la revendication 1, dans lequel la solution de déformation comprend :
du nitrate de calcium et des agents tensioactifs.

4. Procédé selon la revendication 1, dans lequel la solution de déformation comprend un nitrate de calcium ou au moins un sel choisi dans le groupe contenant les sels de calcium et les sels d'ammonium d'acide nitrique, d'acide sulfurique, d'acide carbonique, d'acide phosphorique, d'acide chlorhydrique et d'acide formique ou une combinaison de ceux-ci.

5. Procédé selon la revendication 1, dans lequel la solution de déformation comprend une concentration de sel de calcium allant de 100 à 400 g/1.

6. Procédé selon la revendication 1, dans lequel la solution de déformation comprend un agent tensioactif choisi dans le groupe contenant les éthoxylates d'alcool gras, les éthoxylates d'alkylphénol (APE) et les éthoxylates d'acide gras ou une combinaison de ceux-ci.

7. Procédé selon la revendication 1, comprenant l'étape consistant à habiller le moule de la doublure en tissu avant d'appliquer le coagulant.
